# EUROPÄISCHE PATENTANMELDUNG

(11) **EP 1 997 778 A1**
(43) Veröffentlichungstag der Anmeldung: **03.12.2008**
(21) Anmeldenummer: 08164313.2
(22) Anmeldetag: 06.03.2003
(51) Int. Cl.: C01B 33/18, C03C 3/04, C03C 3/06, C03B 37/014, C03B 37/018, B01J 19/26, B01J 19/08

(54) **Hochreines Silica-Pulver und Verfahren zu seiner Herstellung**

(30) Priorität: 18.03.2002 DE 10211958
(62) Teilanmeldung aus: 03708186.6
(71) Anmelder: Wacker Chemie AG, 81737 München (DE)
(72) Erfinder: Szillat, Holger, 84489 Burghausen (DE); Haack, Bernd, 84567 Perach (DE); Schäfer, Marcus, 83278 Traunstein (DE); Schwertfeger, Fritz, 21365 Adendorf (DE)
(74) Vertreter: Potten, Holger

(57) **Zusammenfassung**

Silica-Pulver mit einer Summe an Verunreinigungen kleiner 500 ppb.

## Beschreibung

Die Erfindung betrifft ein hochreines Silica-Pulver sowie ein Verfahren und eine Vorrichtung zu seiner Herstellung in einer heißen Zone.

Hochreine Silica-Pulver werden auf vielen technischen Gebieten angewandt. Als Beispiele seien die Anwendungsgebiete Lichtleitfasern, Quarztiegel für das Ziehen von Siliziumeinkristallen, Optoelektronik (z.B. Linsen und Spiegel), Füllstoffe in passiven Bauteilen in der Elektronik und Poliersuspensionen für Wafer (Chemical Mechanical Polishing) genannt. Für die genannten Anwendungen ist eine hohe Reinheit der Pulver erforderlich.

In Lichtleitfasern aus SiO₂ für optische Kommunikation soll die Strahlungsintensität des Lichts als Informationsträger durch Absorption aufgrund von Verunreinigungen wie OH, Eisen und Kupfer und durch Streuung aufgrund von Blasen, Kristallisationskeimen und Inhomogenitäten nicht vermindert werden. Kristallisationskeime entstehen durch Verunreinigungen, wie Calcium und Magnesium.

In Quarzglastiegeln tritt in Abhängigkeit von der Zahl und Art der Verunreinigungen während des Ziehprozesses von Silicium-Einkristallen Korrosion der inneren Tiegeloberfläche auf. Durch Korrosion verringert sich die potentielle Ziehdauer. Mit jeder zusätzlichen Verunreinigung erhöht sich außerdem die Zahl von Keimen, an denen sich beim Abkühlen des Einkristalls Sauerstoffausscheidungen bilden können.

In optischen Gläsern sorgen z.B. Natrium und Übergangsmetalle für Transmissionsverluste im Glas. Daher ist es erforderlich, dass die Konzentration der Übergangsmetalle 100 ppb nicht überschreitet. Nur so ist gewährleistet, dass die Transmission für eine Wellenlänge von 248 nm größer 99,5% und für eine Wellenlänge von 193 nm größer 98% ist. In Silica-Pulvern für Lichtleitfasern, Quarztiegeln und Gläsern dürfen zudem keine organischen Verunreinigungen präsent sein, weil sonst beim Sinterschritt zahlreiche Blasen entstehen können.

Hochreines SiO₂ kann auch als Füllstoff in Epoxydharzen zum Schutz von IC-Chips eingesetzt werden, wenn die Konzentration der Elemente Eisen, Natrium und Kalium 0,2 ppm und der Elemente Aluminium und Titan 1 ppm nicht überschreitet. Diese Elemente verändern den thermischen Ausdehnungskoeffizienten, die elektrische Leitfähigkeit und den Korrosionswiderstand der passiven Bauteile. Die Schutzfunktion für den Chip kann dadurch außer Kraft gesetzt werden.

Poliersuspensionen werden zum direkten Polieren von Halbleiteroberflächen eingesetzt. Das hierzu eingesetzte SiO₂ darf z.B. im Fall von Aluminium eine Konzentration von 4 ppm nicht überschreiten.

Ein bekanntes Herstellverfahren für hochreine Silica-Pulver ist die Hydrolyse von Silicium-haltigen Precursoren. Dies kann z.B. in der Weise erfolgen, dass SiCl₄ in Wasser bei Gegenwart eines organischen Lösungsmittels hydrolysiert wird (Degussa, DE 3937394), dass Ammoniumfluorosilikat zuerst mit Ammoniakwasser und dann mit Flußsäure versetzt wird (Nissan, JP 04175218) oder dass durch Zusatz einer verdünnten Mineralsäure zu einem Alkalisilikat Silica gefällt wird (Nippon, EP 0409167, Universität Wuhan, CN 1188075). Das entstandene Silica wird auch als Fällungskieselsäure bezeichnet und findet hauptsächlich Anwendung als Katalysatorträger und als Epoxidharzfüllstoff zum Schutz von LSI und VLSI-Circuit Devices. Mit den genannten Verfahren werden poröse, blasenhaltige und nicht perfekt sphärische Partikel mit schlechtem Fließverhalten hergestellt. Ein weiterer ganz erheblicher Nachteil ist, dass diese Verfahren an Reinheitsgrenzen stoßen, weil bestimmte Verunreinigungen wie OH, C, F, N und Alkalimetalle wie Na und K durch das Verfahren bedingt eingeschleust werden. Diese Nachteile haben hohe Lichtstreuung und -absorption sowie verminderte mechanische und thermische Stabilität des Anwendungsprodukts zur Folge. Damit scheidet dieses Verfahren prinzipiell für die Anwendung in den Bereichen Lichtleitfaser, Tiegel und Gläser aus.

Natürlicher Quarz scheidet aufgrund der strikten Reinheitsanforderungen für obige Anwendungen auch aus. Es hat aber nicht an Versuchen gefehlt, durch den zusätzlichen Verfahrensschritt der Nachreinigung von unzulänglich reinem Quarz akzeptable Reinheiten zu erzielen. Nach DE 3123024 (Siemens) wird natürlicher Quarz durch Schmelzen in dünne Fasern überführt und dann mehreren Auslaugprozeßschritten unter Verwendung von Säuren und Basen unterzogen. Der Gehalt an Übergangsmetallionen kann aufgrund der hohen Oberfläche und geringen Dicke der Fasern auf unter 1 ppm reduziert werden. Dieses Verfahren ist preiswert, wenn die Fasern direkt für Anwendungen im Bereich Lichtleitfasern eingesetzt werden. Wird für andere Anwendungen und Formkörpergeometrien nach DE 3741393 (Siemens) die gereinigte Faser zermahlen, mit Hilfe von Wasser, Dispergiermitteln und anderen Hilfsstoffen in einen Schlicker überführt, anschließend ein Schlickerguß- und schließlich ein Sinterprozeß durchgeführt, resultiert letztendlich ein aufwendiger Prozeß mit vielen Kontaminationsquellen.
Nach EP 0737653 (Heraeus) wird natürlicher Quarz den Prozeßschritten Mahlen, Sichten, Vorwärmen auf 1000°C, Behandeln mit Cl_{2/}HCl, Abkühlen und Desorbieren unterworfen. Dieser zeitaufwendige Prozeß liefert Reinheiten bezüglich Fe um 70 ppb. Verunreinigungen im Bereich Erdalkalimetalle und Al, die als Bildner für Cristobalit bekannt sind und damit z.B. die Tiegelqualität mindern, können nicht in dem Maße entfernt werden, weil diese Elemente schlecht flüchtige Chloride bilden (vorher: Na = 1100 ppb, K = 1050 ppb, Li = 710 ppb, Ca > 370 ppb, Al = 16000 ppb, Fe = 410 ppb; nachher: Na < 10 ppb, K > 80 ppb, Li = 700 ppb, Ca > 120 ppb, Al = 16000 ppb, Fe > 30 ppb).
Nach US 4818510 (Quarz Technology) kann Quarz mit HF nachgereinigt werden. HF reagiert allerdings nur selektiv mit bestimmten Elementen, wie Eisen, mit denen es gut lösliche Komplexe bildet.

Die Nachreinigung wurde auch an SiO₂-Granulaten durchgeführt. Nach US 6180077 und EP 1088789 (Heraeus) wird ein SiO₂-Granulat hergestellt und bei hoher Temperatur mittels HCl gereinigt. Vorteil ist, dass das Granulat eine hohe Oberfläche aufweist und damit leichter und schneller durch HCl angreifbar ist. Geht man von einem Granulat der Reinheit Na < 50 ppb, Fe = 250 ppb, Al < 1 ppm aus, können daraus durch Nachreinigung sehr hohe Reinheiten erzielt werden (Na = 5 ppb, Fe = 10 ppb, Al = 15 ppb). Nachteilig ist, dass zunächst zeitaufwendig ein hochporöses (Porenvolumen 0,5 cm³, Porendurchmesser 50 nm, BET 100 m²/g, Dichte 0,7 g/cm³, Granulatgröße 180 - 500 µm) Silica-Granulat hergestellt werden muss, das noch nicht das fertige Produkt darstellt, sondern noch gesintert werden muss. Ferner birgt die hohe Porosität die Gefahr in sich, dass nach Formgebung z.B. zu einem Tiegel bei der Sinterung Gase eingeschlossen bleiben.

Nach US 4956059 (Heraeus) kann bei der Nachreinigung eines Silica-Granulats zusätzlich zu den bei hohen Temperaturen eingesetzten Reinigungsgasen Cl₂/HCl noch ein elektrisches Feld (typisch 652 V/cm) angewandt werden. In Gegenwart des elektrischen Feldes ist der Nachreinigungseffekt stärker, wovon insbesondere die gut im elektrischen Feld wandernden Alkalimetallionen betroffen sind. So kann mit dieser Methode Natrium von 1 ppm auf 50 ppb reduziert werden.
Nach EP 1006087 (Heraeus) kann die Nachreinigung in der Weise erfolgen, dass unreines Pulver im Gasstrom erhitzt wird, wobei die Verunreinigungen erweichen und Schmelzagglomerate bilden, und dann auf eine Prallfläche geleitet wird, an der nur die verunreinigten Schmelzagglomerate haften bleiben. Diese Methode macht nur Sinn für stark verunreinigte Edukt-Pulver. Eine Nachreinigung bezüglich hochschmelzender Oxide, wie MgO und Al₂O₃, ist so allerdings nicht möglich. Nachteilig sind auch die hierfür benötigten hohen Gasmengen.

Hohe Reinheiten (Metallverunreinigungen < 1 ppm, C < 5 ppm, B < 50 ppb, P < 10 ppb) gelingen mit dem Sol-Gel-Prozeß, bei dem aus einem organischen Silan und Wasser zunächst ein Sol und dann ein Gel gebildet wird. Es folgen Verfahrensschritte zur Trocknung, Calcinierung mit Inertgas und Sinterung (Mitsubishi, EP 0831060, EP 0801026, EP 0474158). Der Prozess ist sehr zeitaufwendig. Er ist auch teuer, weil hochreine Organosilane als Ausgangsmaterialien fungieren. In der Regel werden für den Herstellprozeß ein Lösungsmittel, ein Dispergiermittel und ein rheologisches Hilfsmittel auf organischer Basis eingesetzt, mit der Folge, dass das fertige Produkt schwarze C-Partikel sowie CO- und CO₂-Blasen enthalten kann. Die Verwendung von Wasser führt zu hohem OH-Gehalt und infolgedessen Blasenbildung und geringer Wärmebeständigkeit des Produkts. Wird dieses Material in Form von Silica-Tiegeln bei der Herstellung von Si-Einkristallen nach dem Czochralski-Verfahren eingesetzt, dehnen sich die Blasen und Poren aufgrund der hohen Temperatur und des reduzierten Drucks aus. Blasen sorgen beim Ziehprozeß nicht nur für eine unruhige Silicium-Schmelze, sondern auch für Kristalldefektbildung und Schwächung der Tiegel-Langzeitstabilität.

Die Herstellung von hochreinem Silica gelingt prinzipiell auch durch Abscheidung von Silica aus hochreinen Organosilanen oder SiCl₄ in Gegenwart einer Sauerstoff-Brenngas-Flamme nach dem CVD- oder OVD-Verfahren (Corning, US 5043002, US 5152819, EP 0471139, WO 01/17919, WO 9730933, WO 97/22553, EP 0978486, EP 0978487, WO 00/17115). Nach diesem Verfahren werden jedoch keine Pulver, sondern Glaskörper mit definierter, einfacher Geometrie hergestellt. Zu den einfachen Geometrien zählen optische Gläser und Linsen. Lichtleitfasern können durch Ziehen aus dem hergestellten Glaskörper in hochreiner Form gewonnen werden. Um aus den einfachen Glaskörpern Glaskörper mit beliebiger Geometrie zu produzieren, muss der hergestellte Glaskörper zunächst zu einem Pulver aufgemahlen, dispergiert, geformt und versintert werden. Dies ist jedoch mit zahlreichen Kontaminationen, die insbesondere während des Mahlschritts entstehen, verbunden.
Ein weiterer Nachteil dieses Verfahrens ist, dass zum Erzielen besonders hoher Reinheiten teure, hochreine Organosilane, wie z.B. Octamethylcyclotetrasiloxan (OMCTS), eingesetzt werden.

Hochreine SiO₂-Schichten sind auch durch Abscheidung auf hochreinen Substraten herstellbar (z.B. durch Plasma-CVD/-OVD, GB 2208114, EP1069083,). Nachteil ist, dass nur geringe Abscheideraten von 150 nm/min erzielt werden können (z.B. J.C. Alonso et al., J.Vac.Sci.Technol. A 13(6), 1995, S. 2924 ff.). Beschichtungsverfahren sind mit hohen Produktionskosten verbunden. Hochreine Silica-Pulver sind mittels dieser Verfahren nicht erhältlich.

Eine einfache Verfahrensalternative ist die Bildung von Silica in einer Flamme. Hier sind 2 verschiedene Ansätze bekannt. Nach JP 5-193908 (Toyota/ShinEtsu) kann hochreines Silicium-Metallpulver mittels C₃H₂ₙ₊₂/O₂-Flamme, wobei C₃H₂ₙ₊₂ nur zum Zünden benötigt wird, zu hochreinem Silica-Pulver oxidiert werden. Die Erfinder verweisen jedoch selbst auf das Problem, dass viele Partikel unverbrannt aus der Reaktion hervorgehen. Eine Durchoxidation ist schwer zu realisieren, es sei denn, die Ausgangspartikel sind sehr fein (0,2 µm). Es ist jedoch wiederum kaum möglich, so feine Si-Partikel hochrein herzustellen.

Alternativ kann aus SiCl₄ in einer Knallgasflamme im ersten Schritt durch Flammenhydrolyse Fumed-Silica erzeugt und dieses durch Versinterung im zweiten Schritt in Fused-Silica überführt werden.

Unter dem Begriff Fumed-Silica sind feinstteilige, nanoskalige Pulver zu verstehen, die durch Umsetzung von Silanen in einer Hochtemperaturflamme hergestellt werden und häufig stark aggregiert und agglomeriert sind. Ein typisches Beispiel für Fumed Silica ist Aerosil® OX 50 der Firma Degussa mit einer BET-Oberfläche von 50 m²/g. Mit dem Begriff Fused-Silica sind grobkörnigere, sphärische Glaspulver gemeint. Ein typisches Beispiel für Fused Silica ist Excelica® SE-15 der Firma Tokuyama mit einer mittleren Teilchengröße von 15 µm.

Nach US 5063179 (Cabot) geschieht der zweite Teilschritt (= die Herstellung von Fused Silica) dadurch, dass Fumed-Silica in Wasser dispergiert, filtriert, getrocknet, mit SOCl₂ oder Cl₂ nachgereinigt und im Ofen gesintert wird. Die Konzentrationen der Verunreinigungen, wie Na und Fe, liegen danach um 1 ppm (Gesamtverunreinigungen < 50 ppm), also immer noch recht hoch.

Nach JP 59152215 und JP 5330817 (Nippon Aerosil) wird im zweiten Teilschritt (= die Herstellung von Fused Silica) das Fumed-Silica-Pulver z.B. direkt mittels Schneckenförderer dispergiert, in eine Knallgasflamme überführt und zu Fused Silica-Pulver versintert.

Nach JP 5301708 und JP 62-270415 (Tokuyama) wird zur Herstellung der Fused-Silica hochreine Fumed-Silica mit H₂O bedampft, gekühlt, fluidisiert und mittels Schneckenföderer einer Knallgasflamme zum Zwecke der Versinterung zugeführt.

Das nach den genannten Verfahren erhaltene Fused Silica-Produkt enthält Verunreinigungen > 1000 ppb, summiert über die Elemente Cu, Fe, Ti, Al, Ca, Mg, Na, K, Ni, Cr, Li. Die Dispergierung und Förderung der Fumed-Silica-Partikel erfolgt nach den genannten Verfahren z.B. mit Hilfe eines Schneckenförderers. Die Schnecke ist ein bewegtes Teil, das sich durch Kontakt mit Silica abnutzt, insbesondere im Bereich der Kanten. Dadurch kontaminiert die Schnecke das Silica-Pulver. Auch andere Anlagenbestandteile sind den abrasiven Silica-Partikeln und damit starkem Verschleiß ausgesetzt. Zu nennen ist insbesondere die Brennerdüse, in der die Geschwindigkeiten der Silica-Pulver besonders hoch sind.

Aufgabe der vorliegenden Erfindung war es, ein Silica-Pulver mit sehr hoher Reinheit zur Verfügung zu stellen.

Weitere Aufgabe der vorliegenden Erfindung war es, ein Verfahren und eine Vorrichtung zur kostengünstigen Herstellung des erfindungsgemäßen Pulvers zur Verfügung zu stellen.

Die erstgenannte Aufgabe wird gelöst durch ein Silica-Pulver mit einer Summe an Verunreinigungen kleiner 500 ppb.

Vorzugsweise ist die Summe an Verunreinigungen im erfindungsgemäßen Silica-Pulver kleiner 150 ppb. Besonders bevorzugt ist die Summe an Verunreinigungen kleiner 150 ppb, wobei die Verunreinigung an Cu < 1 ppb, an Fe < 25 ppb, an Ni < 2 ppb, an Cr < 2 ppb, an Ti < 3 ppb, an Al < 31 ppb, an Ca < 65 ppb, an Mg < 12 ppb, an Na < 12 ppb, an K < 6 ppb und an Li < 1 ppb ist und das Pulver zudem frei ist von Kohlenstoff.

Die Bestimmung der Verunreinigungen erfolgt gemäß der ICP-Analysenmethode (Inductive Coupled Plasma, Gerätetyp ICP-MS HP4500), die Nachweisgrenze der Methode ist kleiner als 1 ppb. Bei den Silica-Pulvern kann es sich sowohl um Fumed-Silica als auch Fused-Silica handeln.

Die Fumed Silica-Partikel haben vorzugsweise eine BET-Oberfläche zwischen 50 und 300 m²/g, besonders bevorzugt zwischen 150 und 250 m²/g. Die Primärpartikelgröße liegt zwischen 1 nm und 1000 nm, bevorzugt zwischen 5 nm und 100 nm, ganz besonders bevorzugt zwischen 10 nm und 30 nm.

Das Fused Silica-Pulver hat vorzugsweise eine mittlere Teilchengröße zwischen 100 nm und 200 µm, besonders bevorzugt zwischen 1 µm und 200 µm, ganz besonders bevorzugt zwischen 5 µm und 40 µm. Das Pulver hat ferner vorzugsweise eine enge Partikelverteilung mit D(95) - D(5) < 50 µm, besonders bevorzugt D(95) - D(5) < 35 µm z.B. bei einer mittleren Partikelgröße von D(50) = 15 µm: D(5) = 1 µm, D(95) = 50 µm, besonders bevorzugt D(5) = 3 µm, D(95) = 35 µm (gemessen mit CILAS 715).

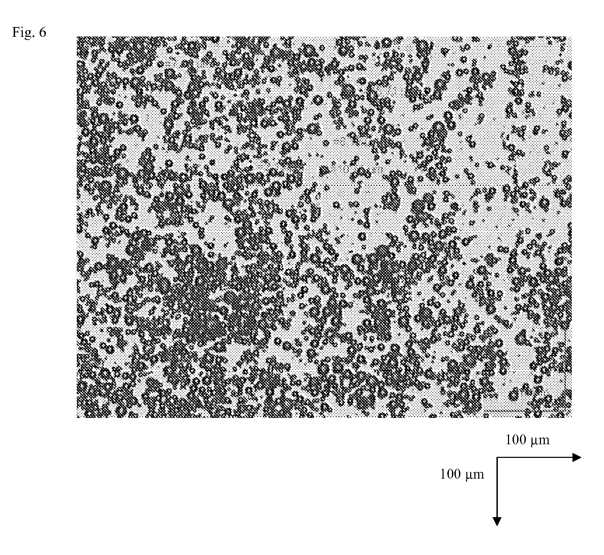

Aufgrund der engen Partikelgrößenverteilung des erfindungsgemäßen Produkts sind zusätzliche Verfahrensschritte, wie Sichten, nicht erforderlich und das Pulver ist direkt weiterverarbeitbar. Fig. 6 zeigt beispielhaft die sehr einheitliche Partikelgrößenverteilung eines Fused-Silica-Pulvers, welches gemäß Beispiel 4 hergestellt wurde.

Die Fused Silica-Partikel des erfindungsgemäßen Pulvers haben vorzugsweise eine sphärische Morphologie und sind vollständig verglast. Sie weisen im Unterschied zu Pulvern nach dem Sol-Gel-Prozeß keine Blasen und Kohlenstoff-Verunreinigungen, herrührend vom Einsatz organischer Lösungs-, Dispergier- und rheologischer Mittel, auf.

Die erfindungsgemäßen hochreinen Fumed-Silica- und Fused-Silica-Pulver können für alle aus dem Stand der Technik genannten Anwendungen eingesetzt werden. Sie eignen sich vorzugsweise zur Herstellung von Formkörpern wie z.B. in DE 19943103 (Wacker Chemie GmbH) beschrieben.

Ein erfindungsgemäßes Pulver lässt sich vorzugsweise mittels eines Verfahrens herstellen, bei dem durch eine Hydrolyse eines hochreinen SiCl₄ ein hochreines Fumed-Silica-Pulver gewonnen wird, dadurch gekennzeichnet, dass die Hydrolyse des SiCl₄ zu dem Fumed-Silica-Pulver in einer Vorrichtung mit einer metallfreien Oberfläche erfolgt. Die Hydrolyse des hochreinen SiCl₄ erfolgt in einer Flamme. Die Flamme besteht aus einem Sauerstoff-haltigen Gas und einem Gas, ausgewählt aus der Gruppe Kohlenwasserstoff und Wasserstoff, bevorzugt aus Luft oder Sauerstoff und einem Gas, ausgewählt aus der Gruppe Methan, Propan und Wasserstoff, besonders bevorzugt aus Sauerstoff und Wasserstoff. Vorzugsweise erfolgt die Hydrolyse in einer H₂/O₂-Flamme. Alternativ erfolgt die Hydrolyse in einem Plasma, bevorzugt in einem HF-Plasma.

Vorzugsweise erfolgt auch die Abscheidung des Fumed-Silica-Pulvers in einer Vorrichtung mit einer metallfreien Oberfläche.

Als Edukte geeignet sind ferner Silane, Silizium-organische Verbindungen und Halogensilane mit einer Verunreinigung < 100 ppb. Bevorzugt geeignet ist SiCl₄ mit einer Verunreinigung < 100 ppb, besonders bevorzugt geeignet ist SiCl₄ mit einer wie in Tabelle 1 angegebenen Reinheit.

Durch eine Sinterung lässt sich aus dem erfindungsgemäßen Fumed-Silica-Pulver ein ebenfalls erfindungsgemäßes hochreines Fused-Silica-Pulver herstellen.

Die Sinterung des hochreinen Fumed-Silica-Pulvers erfolgt vorzugsweise in einer Vorrichtung wie sie zur Herstellung des erfindungsgemäßen Fumed-Silica-Pulvers verwendet wurde, in einer H₂/O₂-Flamme oder mittels eines HF-Plasmas. Zur Steuerung der Partikelgrößen des Fused Silica-Pulvers kann noch eine gezielte Menge Wasser zur Fumed Silica hinzugegeben werden.

Vorzugsweise wird zur Vermeidung einer Kontamination durch Umweltelemente wie Na, K, Mg oder Ca unter Reinraumbedingungen bzw. unter einem laminar flow gearbeitet.

Das Verfahren wird dann unter Reinraumbedingungen der Klassen 100000 bis 1, bevorzugt 10000 bis 100, besonders bevorzugt 1000 durchgeführt.

Alternativ zu Reinraumbedingungen kann das Verfahren unter einem Druck zwischen 0,913 bar und 1,513 bar, vorzugsweise 1,013 bar und 1,413 bar, besonders bevorzugt zwischen 1,020 bar und 1,200 bar durchgeführt werden. Durch den Überdruck wird verhindert, dass Verunreinigungen in die Anlage eindringen.

Wenn das erfindungsgemäße Pulver in einer H₂/O₂-Flamme hergestellt wird, so handelt es sich bei der erfindungsgemäßen Vorrichtung um eine Düse umfassend ein in einem äußeren Rohr liegendes inneres Rohr, wobei ein Edukt ausgewählt aus der Gruppe SiCl₄, Gemisch aus SiCl₄ mit O₂, Fumed-Silica und Gemisch aus Fumed-Silica mit O₂ durch das innere Rohr geführt wird, dadurch gekennzeichnet, dass das innere Rohr aus einem silicium-haltigen Material mit Silicium als Hauptbestandteil, wie z.B. Quarzglas, Quarzgut, SiC, Si₃N₄, Emaille oder Siliciummetall, besteht.

Vorzugsweise besteht das innere Rohr aus einem silicium-haltigen Material mit Silicium als Hauptbestandteil, wie z.B. Quarzglas, Quarzgut, SiC, Si₃N₄, Emaille oder Siliciummetall, wobei die Oberfläche des Materials mit einem chlorhaltigen Gas wie z.B. SOCl₂, HCl oder Cl₂ gereinigt wurde.

Besonders bevorzugt handelt es sich um eine Düse, bei der das innere Rohr aus Quarzglas oder einem Werkstoff mit Quarzglasoberfläche besteht, wobei dieses insbesondere bevorzugt mit einem chlorhaltigen Gas wie z.B. SOCl₂, HCl oder Cl₂ gereinigt wurde.

Insbesondere bevorzugt besteht die gesamte Düse aus Quarzglas oder einem Werkstoff mit Quarzglasoberfläche. Die Reinheit kann noch gesteigert werden, wenn hierbei das Quarzglas oder der Werkstoff mit Quarzglasoberfläche mit z.B. SOCl₂, HCl oder Cl₂ gereinigt wurde.

Wenn nur das innere Rohr für die Fumed-Silica- bzw. SiCl₄ - Zufuhr aus Quarzglas besteht und der Rest der Düse aus z.B. Stahl besteht, so ist die Reinheit des hergestellten Pulvers zwar etwas schlechter als bei eine Düse aus Quarzglas, aber immer noch höher als bei bekannten Silica-Pulvern.

Die Erfindung betrifft somit auch eine Düse umfassend ein in einem äußeren Rohr liegendes inneres Rohr, dadurch gekennzeichnet, dass das innere Rohr aus einem siliciumhaltigen Material mit Silicium als Hauptbestandteil besteht. Dieses Material ist vorzugsweise ausgewählt aus der Gruppe Quarzglas, Quarzgut, SiC, Si₃N₄, Emaille oder Siliziummetall.

Vorzugsweise besteht die Düse aus einem Material ausgewählt aus der Gruppe Quarzglas, Quarzgut, SiC, Si₃N₄, Emaille oder Siliciummetall, besonders bevorzugt aus Quarzglas.

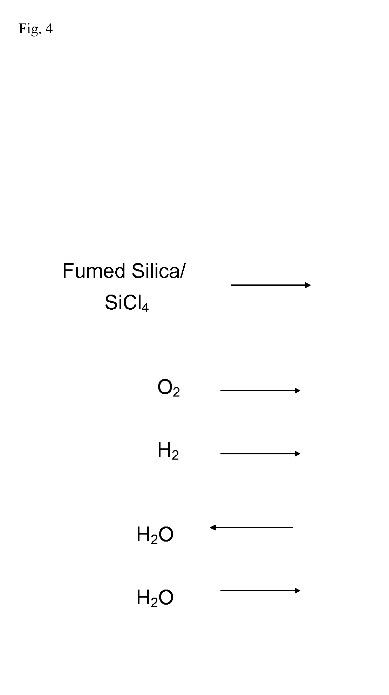

Bei der Düse handelt es sich vorzugsweise um eine bezüglich der Brenngase nicht vorgemischte Düse. In einer solchen Düse werden die Brenngase H₂ und O₂ getrennt dem Brennraum zugeführt. In einer Ausführungsform der erfindungsgemäßen Düse werden SiCl₄ bzw. Fumed-Silica in einer Vorkammer mit einem der Brenngase, vorzugsweise mit O₂ vorgemischt und dem Brennraum zugeführt. Die Düse besteht aus einem inneren Rohr für die Zufuhr des Gemisches aus O₂ und Fumed-Silica- (SiCl₄-) und einem äußeren Rohr für die H₂-Zufuhr (Fig. 4).

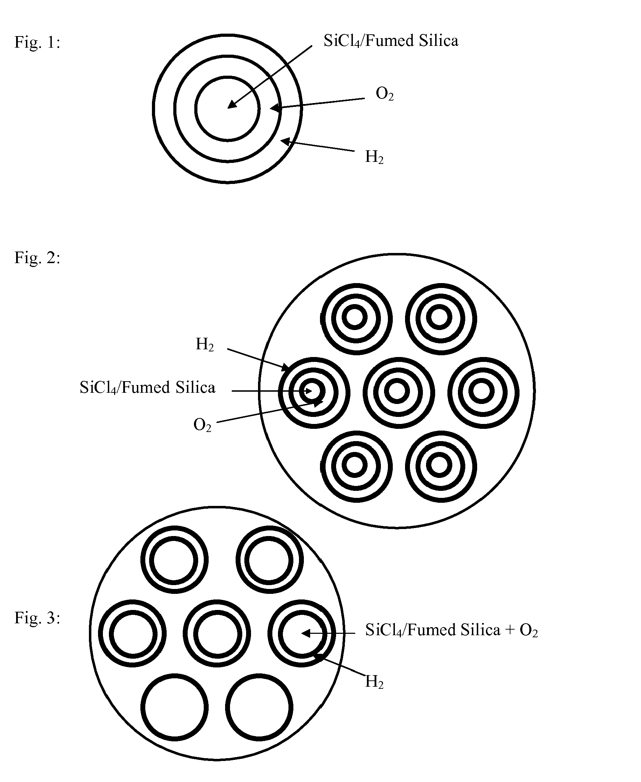

In einer anderen Ausführungsform der erfindungsgemäßen Düse werden alle Reaktionspartner (H₂, O₂, SiCl₄ bzw. Fumed-Silica) getrennt dem Brennraum zugeführt. Die Düse besteht aus konzentrisch angeordneten Rohren für die Fumed-Silica- (SiCl₄-), O₂- und H₂-Zufuhr. Eine mögliche Anordnung besteht aus einem inneren Rohr für die Fumed-Silica- (SiCl₄-) -Zufuhr, einem mittleren Rohr für die O₂-Zufuhr und einem äußeren Rohr für die H₂-Zufuhr (Fig. 1).

Vorzugsweise umfasst ein Brenner zur Erzeugung des erfindungsgemäßen Pulvers mittels H₂/O₂-Flamme mehrere der erfindungsgemäßen Düsen. Der Brenner liefert ein Pulver mit einer engen Partikelverteilung im Fall einer Düse (Fig. 1), eine besonders enge Partikelverteilung mit mehreren Düsen bei denen die Zufuhr der Edukte durch 3 konzentrische Rohre erfolgt (Fig. 2), eine ganz besonders enge Partikelverteilung mit mehreren Düsen und einer O₂ - Fumed Silica-Vormischkammer bei der die Zufuhr der Edukte durch 2 konzentrische Rohre erfolgt (Fig. 3). Diese Anordnung ermöglicht eine optimale homogene Verteilung des SiCl₄ (bzw. des Fumed-Silica-Pulvers bei Erzeugung von Fused-Silica-Pulver) in der Flamme.

Die Erfindung betrifft somit auch einen Brenner enthaltend 1 bis 30, vorzugsweise 6 bis 13, besonders bevorzugt 7 erfindungsgemäße Düsen. Vorzugsweise besteht die dem Brennraum zugewandte Oberfläche des Brenners ebenfalls aus Quarzglas. Ein solcher Brenner mit 7 erfindungsgemäßen Düsen ist in Fig. 4 abgebildet. Figur 3 zeigt schematisch eine Aufsicht auf einen solchen Brenner. Figur 2 zeigt schematisch eine Aufsicht auf einen Brenner mit 7 Düsen, bei denen alle 3 Edukte, wie bereits beschrieben, getrennt in den Brennraum geführt werden.

In der Variante der erfindungsgemäßen Düse, bei der eine Vormischung von O₂ und Fumed-Silica-Pulver vor der Zufuhr zur Brennkammer erfolgt, wird die Dispergierung der Fumed-Silica in der Flamme noch verbessert.

Wenn das erfindungsgemäße Pulver in einem Plasma hergestellt wird, so handelt es sich bei der erfindungsgemäßen Vorrichtung um einen Plasmabrenner umfassend eine Pulverdüse, ein Zwischenrohr und ein Außenrohr (Fig. 4) wobei die Pulverdüse, das Zwischenrohr und das Außenrohr eine Oberfläche aus einem siliciumhaltigen Material mit Silicium als Hauptbestandteil besitzt. Vorzugsweise besteht die Oberfläche aus einem Material ausgewählt aus der Gruppe Quarzglas, Quarzgut, SiC, Si₃N₄, Emaille oder Siliciummetall. Vorzugsweise ist die Oberfläche mit einem Gas wie SOCl₂, Cl₂ oder HCl gereinigt. SiCl₄ bzw. das Fumed-Silica-Pulver wird über die Pulverdüse eindosiert, das Plasmagas O₂ über das Zwischenrohr und das Mantelgasgemisch O₂ und H₂ über das Außenrohr.

Besonders bevorzugt handelt es sich um einen Plasmabrenner bei dem die Pulverdüse, das Zwischenrohr und das Außenrohr eine Oberfläche aus Quarzglas besitzen.

Insbesondere bevorzugt besitzt der Plasmabrenner eine Oberfläche aus Quarzglas.

Mit den erfindungsgemäßen Vorrichtungen gelingt es, hochreine Pulver direkt herzustellen. Der üblicherweise notwendige Verfahrensschritt Nachreinigung wird vermieden. Unter Verwendung einer erfindungsgemäßen Düse können Fumed- und Fused-Silica-Pulver extrem hoher Reinheiten hergestellt werden (Tabelle 1), die nach herkömmlichen Verfahren nicht erreicht wurden. Die Reinheit lässt sich durch die Verbrennung in einer Düse aus Quarzglas unter Reinraumbedingungen nochmals steigern. Ferner ist es vorteilhaft, wenn alle Oberflächen der Anlage zur Herstellung des erfindungsgemäßen Fumed- oder Fused-Silica-Pulvers die mit einem pulverförmigen Edukt oder dem erfindungsgemäßen Produkt in Berührung kommen, auf Kontaminationsfreiheit ausgerichtet sind. Eine Vorrichtung zur Herstellung eines erfindungsgemäßen Silica-Pulvers ist daher vorzugsweise dadurch gekennzeichnet, dass alle mit dem Silica-Pulver in Berührung kommenden Oberflächen metallfrei sind. Eine Anlage zur Herstellung eines Silica-Pulvers umfasst bekanntermaßen a) eine Vorrichtung zur Dosierung, b) einen Brenner c) eine Brennkammer, d) einen Zyklon und e) ein Silo. Bei der Fumed-Silica-Herstellung ist zwischen Zyklon und Silo in der Regel noch ein Fließbett zwischengeschaltet.

Die für die erfindungsgemäße Düse genannten Werkstoffe bilden vorzugsweise auch die Oberfläche der Dosierung, der Brennkammer, des Zyklons, des Fließbetts und des Silos. Die Vorrichtung zur Dosierung und das Silo können in einer anderen Ausführungsform auch eine reine Kunststoffoberfläche besitzen. Bei den Kunststoffen handelt es sich beispielsweise um PFA (Perfluoralkoxy-Copolymer), PTFE (Polytetrafluorethylen), Halar^{®}E-CTFE, GFK (Glasfaserverstärktes Polyesterharz) und PP (Polypropylen). Im Bereich der Dosierung ist eine Förderung der Silica-Pulver ohne bewegte Teile vorzuziehen, z.B. eine pneumatische Förderung mittels Druckluft.

Die Figuren zeigen:
- Fig. 1:: Brenneraustritt als 3-Rohrbrennerdüse ohne Vormischung O₂ mit SiCl₄ bzw. Fumed-Silica
- Fig. 2:: Brenneraustritt umfassend 7 Düsen ohne Vormischung O₂ mit SiCl₄ bzw. Fumed-Silica
- Fig. 3:: Brenneraustritt umfassend 7 Düsen mit Vormischung O₂ mit SiCl₄ bzw. Fumed-Silica
- Fig. 4:: Brenner umfassend 7 Quarzglasdüsen mit Vormischung O₂ mit SiCl₄ bzw. Fumed-Silica

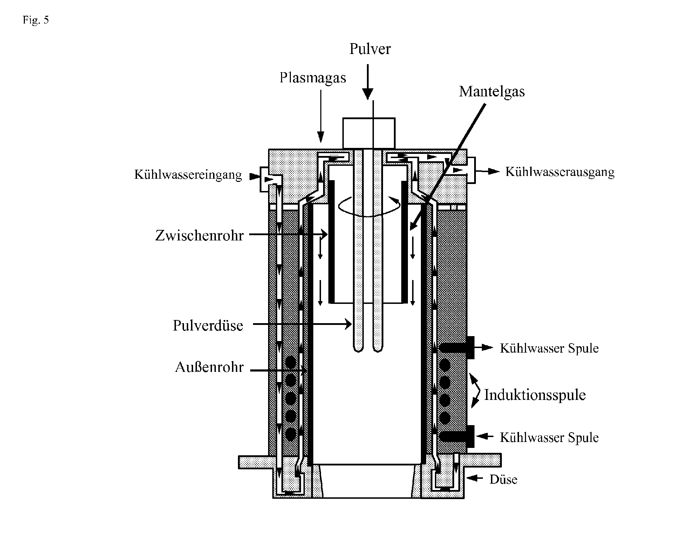

- Fig. 5:: Plasma-Brenner
- Fig. 6:: Fused-Silica-Pulver aus Beispiel 4

Die folgenden Beispiele dienen der weiteren Erläuterung der Erfindung.

### Beispiel 1: Herstellung eines Fumed-Silica-Pulvers aus SiCl₄ mittels Knallgasflamme ohne Reinraumbedingungen

Zur Herstellung eines Fumed-Silica-Pulvers aus SiCl₄ werden die Reaktionspartner SiCl₄, O₂ und H₂ mittels einer nicht vorgemischten Düse aus Quarzglas in die Brennkammer geleitet. Die Reaktion erfolgt mit 16,6 g/min SiCl₄ + 6,3 1/min O₂ + 8,9 l/min H₂. Die Brennkammer wird unter einem Überdruck von 20 mbar betrieben. Analytisches Ergebnis siehe Tabelle 1.

### Beispiel 2: Herstellung eines Fumed-Silica-Pulvers aus SiCl₄ mittels Knallgasflamme mit Reinraumbedingungen

Zur Herstellung eines Fumed-Silica-Pulvers aus SiCl₄ werden die Reaktionspartner SiCl₄, O₂ und H₂ mittels einer nicht vorgemischten Düse aus Quarzglas in die Brennkammer geleitet. Die Reaktion erfolgt mit 16,6 g/min SiCl₄ + 6,3 1/min O₂ + 8,9 l/min H₂. Die gesamte Anlage befindet sich in einem Reinraum der 10000er Reinraumklasse. Analytisches Ergebnis siehe Tabelle 1.

### Beispiel 3: Herstellung eines Fused-Silica-Pulvers aus einem Fumed-Silica-Pulver mittels Knallgasflamme ohne Reinraumbedingungen

Zur Herstellung von Fused-Silica-Pulver aus Fumed-Silica-Pulver werden die Reaktionspartner Fumed-Silica, O₂ und H₂ mittels einer nicht vorgemischten Düse aus Quarzglas in die Brennkammer geleitet. Die Reaktion erfolgt mit 180 l/min H₂ + 90 1/min O₂ + 60,3 g/min Fumed-Silica-Pulver. Die Brennkammer wird unter einem Überdruck von 40 mbar betrieben. Analytisches Ergebnis siehe Tabelle 1.

### Beispiel 4: Herstellung Fused-Silica-Pulver aus Fumed-Silica-Pulver mittels Knallgasflamme unter Reinraumbedingungen

Zur Herstellung von Fused-Silica-Pulver aus Fumed-Silica-Pulver werden die Reaktionspartner Fumed-Silica-Pulver, O₂ und H₂ mittels einer vorgemischten Düse aus Quarzglas in die Brennkammer geleitet. Die Reaktion erfolgt mit 180 l/min H₂ + 90 1/min O₂ + 60,3 g/min Fumed-Silica-Pulver. Die gesamte Anlage befindet sich in einem Reinraum der 10000er Reinraumklasse. Analytisches Ergebnis siehe Tabelle 1.

### Beispiel 5: Herstellung Fused-Silica-Pulver aus Fumed-Silica-Pulver mittels HF-Plasma unter Reinraumbedingungen

Zur Herstellung von Fused-Silica-Pulver aus Fumed-Silica-Pulver werden die Reaktionspartner Fumed-Silica-Pulver, Luft und H₂ über einen Brenner, bestehend aus Quarzglaszylindern in die Brennkammer geleitet. Die Reaktion erfolgt mit 45 1/min O₂ als zentrales Plasmagas, 90 1/min O₂ und 25 l/min H₂ als Mantelgas und 15 kg/h Fumed-Silica-Pulver, dosiert über die Pulverdüse. Der Druck in der Brennkammer beträgt 300 Torr, die Gesamtleistung des HF-Plasmas 90 kW. In dem vorliegenden Fall handelt es sich um ein HF-Plasma nach dem Fachmann bekannten Prinzip der Solid State Technology. Die gesamte Anlage befindet sich in einem Reinraum der 10000er Reinraumklasse. Analytisches Ergebnis siehe Tabelle 1.

### Beispiel 6: Herstellung Fused-Silica-Pulver aus Fumed-Silica-Pulver mittels Knallgasflamme unter Reinraumbedingungen mit Standarddüse, nicht aus Quarzglas

Zur Herstellung von Fused-Silica-Pulver aus Fumed-Silica-Pulver werden die Reaktionspartner Fumed-Silica-Pulver, O₂ und H₂ mittels einer vorgemischten Düse aus Edelstahl in die Brennkammer geleitet. Die Reaktion erfolgt mit 180 l/min H₂ + 90 1/min O₂ + 60,3 g/min Fumed-Silica-Pulver. Die gesamte Anlage befindet sich in einem Reinraum der 10000er Reinraumklasse. Analytisches Ergebnis siehe Tabelle 1.

### Vergleichsbeispiel 7: Herstellung Fused-Silica aus Fumed-Silica mittels Knallgasflamme nach Patent JP 59152215

Das Fumed-Silica-Pulver mit hoher Reinheit wird über einen Schneckenförderer in einen Sauerstoffstrom geführt und von dort in das Brennerrohr geleitet. Der Brenner besteht aus 3 Rohren, wobei 7,6 m³/h H₂ über das innere und äußere Rohr in die Brennkammer eingeleitet werden, während das mittlere Rohr 3,8 m³/h O₂ und 1,8 kg/h Fumed-Silica-Pulver enthält. Analytisches Ergebnis siehe Tabelle 1.

**Tabelle 1:**

| Verunreinigungen des im jeweiligen Beispiel hergestellten Produktes sowie des eingesetzten SiCl₄ in ppb, ermittelt mit ICP/MS. | | | | | | | | | | | |
|---|---|---|---|---|---|---|---|---|---|---|---|
| **Bsp.** | **Cu** | **Fe** | **Ti** | **Al** | **Ca** | **Mg** | **Na** | **K** | **Ni** | **Cr** | **Li** |
| **1** | <1 | 22 | 2 | 24 | 54 | 9 | 8 | 5 | 2 | 2 | <1 |
| **2** | <1 | 10 | <1 | 10 | 11 | 2 | 4 | 1 | <1 | <1 | <1 |
| **3** | <1 | 25 | 2 | 31 | 64 | 11 | 11 | 5 | 2 | 2 | <1 |
| **4** | <1 | 10 | <1 | 9 | 13 | 3 | 5 | 1 | <1 | <1 | <1 |
| **5** | <1 | 12 | <1 | 15 | 14 | 3 | 6 | 1 | <1 | <1 | <1 |
| **6** | <1 | 250 | 4 | 63 | 15 | 7 | 7 | 2 | 43 | 27 | <1 |
| **7** | 4 | 730 | <1 | 62 | 66 | 134 | 19 | 9 | 167 | 235 | <1 |
| **SiCl₄** | <1 | 10 | <1 | 3 | 8 | <1 | 3 | 2 | <1 | <1 | <1 |

## Patentansprüche

1. Fused Silica-Pulver, **dadurch gekennzeichnet, dass** es eine Summe an Verunreinigungen kleiner 500 ppb und eine mittlere Teilchengröße zwischen 100 nm und 200 µm hat.

2. Silica-Pulver mit einer Summe an Verunreinigungen kleiner 150 ppb.

3. Silica-Pulver nach Anspruch 1, **dadurch gekennzeichnet, dass** die Summe an Verunreinigungen kleiner 150 ppb ist und die Verunreinigung an Cu < 1 ppb, an Fe < 25 ppb, an Ni < 2 ppb, an Cr < 2 ppb, an Ti < 3 ppb, an Al < 31 ppb, und an Ca < 65 ppb, Mg < 12 ppb, Na < 12 ppb, K < 6 ppb, Li < 1 ppb ist und das Pulver frei von Kohlenstoff ist.

4. Silica-Pulver nach Anspruch 1, 2 oder 3, **dadurch gekennzeichnet, dass** es ein Fused-Silica-Pulver ist und eine mittlere Teilchengröße zwischen 1 µm und 200 µm, bevorzugt zwischen 5 µm und 40 µm, hat.

5. Silica-Pulver nach Anspruch 4, **dadurch gekennzeichnet, dass** es eine enge Partikelverteilung mit D(95) - D(5) < 50 µm, bevorzugt D(95) - D(5) < 35 µm hat.

6. Silica-Pulver nach Anspruch 4 oder 5, **dadurch gekennzeichnet, dass** es eine sphärische Morphologie hat und vollständig verglast ist.

7. Verfahren zur Herstellung eines Silica-Pulvers gemäß einem der Ansprüche 4 bis 6, bei dem durch eine Versinterung eines hochreinen Fumed-Silica-Pulvers ein hochreines Fused-Silica-Pulver gewonnen wird, **dadurch gekennzeichnet, dass** die Versinterung des Fumed-Silica-Pulvers in einer Vorrichtung mit einer metallfreien Oberfläche erfolgt.

8. Verfahren gemäß Anspruch 7, **dadurch gekennzeichnet, dass** es unter Reinraumbedingungen durchgeführt wird.

9. Verfahren gemäß Anspruch 8, **dadurch gekennzeichnet, dass** es sich um Reinraumbedingungen der Klassen 100000 bis 1, bevorzugt 10000 bis 100, besonders bevorzugt 1000 handelt.

10. Verfahren gemäß Anspruch 7, **dadurch gekennzeichnet, dass** es unter einem Druck zwischen 0,913 bar und 1,513 bar, vorzugsweise 1,013 bar und 1,413 bar, besonders bevorzugt zwischen 1,020 bar und 1,200 bar durchgeführt wird.
